# EUROPÄISCHE PATENTSCHRIFT

(11) **EP 4 126 583 B1**
(45) Veröffentlichungstag und Bekanntmachung des Hinweises auf die Patenterteilung: **13.08.2025**
(21) Anmeldenummer: 21715495.4
(22) Anmeldetag: 22.03.2021
(51) Int. Cl.: B60L 3/10, B60L 7/26, B60K 7/00, B60T 8/175, B60L 15/20, B60L 15/38, B62D 59/04, B60T 8/17, B60T 7/20, B60L 58/13

(54) **VERFAHREN UND VORRICHTUNG ZUM ANSTEUERN EINES ELEKTRISCHEN ANTRIEBS EINES ANHÄNGERFAHRZEUGS**
METHOD AND APPARATUS FOR ELECTRIC DRIVE CONTROL OF A TRAILER
PROCÉDÉ ET DISPOSITIF DE CONTRÔLE D'ENTRAÎNEMENT ÉLECTRIQUE D'UNE REMORQUE

(30) Priorität: 26.03.2020 DE 102020108391
(43) Veröffentlichungstag der Anmeldung: 08.02.2023
(73) Patentinhaber: ZF CV Systems Global GmbH, 3006 Bern (CH)
(72) Erfinder: FLAUM, Nikolai, 30457 Hannover (DE); HESEDING, Johannes, 30169 Hannover (DE); RICKE, Janik, 31311 Uetze (DE); WALLBAUM, Torsten, 31089 Duingen (DE)
(74) Vertreter: Ohlendorf, Henrike
(86) Internationale Anmeldenummer: PCT/EP2021/057213
(87) Internationale Veröffentlichungsnummer: WO 2021/191125

(56) Entgegenhaltungen:
- EP-A1- 3 162 606
- EP-A2- 2 868 518
- DE-A1- 102018 121 439
- US-A1- 2015 251 658
- US-A1- 2018 236 994
- US-A1- 2018 304 944

## Beschreibung

Die Erfindung betrifft die Ansteuerung von elektrischen Antrieben in Anhängerfahrzeugen. Insbesondere betrifft die Erfindung hierzu ein Verfahren zum Ansteuern eines elektrischen Antriebs eines Anhängerfahrzeugs sowie Vorrichtungen und Fahrzeuge zum Ausführen des Verfahrens. Ein Anhängerfahrzeug wird durch ein Zugfahrzeug, das beispielsweise ein Nutzfahrzeug ist, gezogen. Derartige durch Nutzfahrzeuge gezogene Anhängerfahrzeuge, die im Folgenden auch kurz Anhänger genannt werden, sind insbesondere Sattelauflieger und Deichselanhänger.

Nutzfahrzeuge, die neben einem Verbrennungsmotor als primäre Antriebsquelle zusätzlich einen elektrischen Antrieb zur Unterstützung eines Verbrennungsmotors aufweisen, sind bekannt. Die elektrischen Antriebe dienen in den Nutzfahrzeugen beispielsweise, um den Verbrennungsmotor in einem energieeffizienten Drehzahlbereich betreiben zu können oder einen zusätzlichen Schub, beispielsweise beim Anfahren oder Bergauffahren, bereitzustellen. Darüber hinaus kann mit elektrischen Antrieben kinetische und potentielle Energie des Fahrzeugs zurückgewonnen und als elektrische Energie in einem Energiespeicher des elektrischen Antriebs gespeichert werden.

Es ist außerdem bekannt, dass auch Anhänger für Nutzfahrzeuge mit einem elektrischen Antrieb ausgestattet werden können, um durch den Anhänger eine zusätzliche Antriebskraft für das Zugfahrzeug, beispielsweise bei einer Bergauffahrt, zur Verfügung zu stellen. In EP 2 842 814 B1 wird ein Steuergerät des Zugfahrzeugs mit einem weiteren Steuergerät im Anhänger verbunden, sodass diese kommunizieren. Das weitere Steuergerät, das vom Steuergerät Steuerbefehle empfängt, steuert dann einen elektrischen Antrieb im Anhängerfahrzeug.

DE 10 2018 121 439 A1 offenbart ein Verfahren für ein Anhängerbremssteuergerät eines Fahrzeuganhängers mit einem elektrischen Antrieb, wobei das Verfahren ein Empfangen eines Beschleunigungsanforderungssignals mit einer angeforderten positiven oder negativen Beschleunigung von einem Zugfahrzeug umfasst. Ein Drehmomentanforderungssignal für den elektrischen Antrieb wird in Abhängigkeit des Beschleunigungsanforderungssignals und eines Statussignals erzeugt.

US 2015/251658 A1 offenbart ein Verfahren zum Abschätzen eines Radschlupfs von angetriebenen Rädern eines Motorfahrzeugs.

Gemäß dem Stand der Technik ist es demnach bekannt, dass ein Zugfahrzeug mit einem Anhängerfahrzeug kommuniziert, um einen Antriebswunsch, beispielsweise in Abhängigkeit einer Gas- oder Bremspedalstellung, vom Zugfahrzeug an das Anhängerfahrzeug zu übermitteln. Wie sich das Anhängerfahrzeug aber tatsächlich verhält und welchen Anteil der Antrieb des Anhängerfahrzeugs am Gesamtantrieb eines Gespanns aus Zugfahrzeug und Anhängerfahrzeug darstellt, ist bislang nur durch aufwändige Sensorik messbar. Dies muss jedoch essentiell bekannt sein, insbesondere um ein Schieben des Anhängerfahrzeugs, das zu instabilem Fahrverhalten führen kann, zu vermeiden. Demnach ist aus dem Stand der Technik bekannt, zusätzliche Sensoren am Zugfahrzeug bereitzustellen, um die tatsächliche Reaktion eines Antriebs durch das Anhängerfahrzeug zu überwachen und den Antrieb dann beispielsweise durch einen neuen Steuerbefehl des Zugfahrzeugs zu regeln.

Somit kann eine Verzögerung oder Beschleunigung des Fahrzeuganhängers über seinen elektrischen Antrieb nur iterativ erfolgen, bis sich an der zusätzlich am Zugfahrzeug angebrachten Sensorik ein richtiger Messwert eingestellt hat, um instabile Fahrzustände zu vermeiden. Daraus resultiert eine verlangsamte Regelkette bei der Antriebsunterstützung sowie auch bei einer Verzögerung, die als Rekuperation für einen elektrischen Antrieb verwendet werden kann. Folge ist eine geringere Effizienz einerseits, wobei andererseits auch nur eingeschränkt oder gar nicht in stabilitätskritischen Situationen, die nicht durch den elektrischen Antrieb verursacht sind und in denen beispielsweise Fahrerassistenzsysteme eingreifen, durch den elektrischen Antrieb unterstützt werden kann. Insbesondere sind durch die bekannten Systeme somit zusätzliche Bauteile notwendig, womit zusätzliche Kosten einhergehen und ein effizienter Einsatz des elektrischen Antriebs ist nicht gewährleistet.

Aufgabe der vorliegenden Erfindung ist es daher, einen elektrischen Antrieb eines Anhängerfahrzeugs in gegenüber dem Stand der Technik verbesserter Weise anzusteuern, wobei die Ansteuerung möglichst mit geringem oder ohne zusätzlichen Bauteilaufwand möglich sein soll und gleichzeitig einen effizienteren zielgerichteten Einsatz des Antriebs ermöglichen soll.

Insbesondere ist es Aufgabe der vorliegenden Erfindung, zumindest einem der zuvor im Stand der Technik genannten Probleme zu begegnen.

Hierzu betrifft die Erfindung ein Verfahren nach Anspruch 1. Demnach umfasst die Erfindung ein Verfahren zum Ansteuern eines elektrischen Antriebs eines Anhängerfahrzeugs mit einem Zugfahrzeug. Das Verfahren dient also zum Ansteuern eines elektrischen Antriebs.

Ein elektrischer Antrieb umfasst vorzugsweise mindestens einen elektrischen Motor, der im motorischen Betrieb oder im generatorischen Betrieb betreibbar ist. Hierzu ist der Motor vorzugsweise über einen steuerbaren Umrichter mit einem Energiespeicher, nämlich einer Batterie oder einem Akkumulator, verbunden. Im motorischen Betrieb versorgt der Umrichter den elektrischen Antrieb mit Energie aus dem Energiespeicher, um ein positives Drehmoment zu erzeugen. Im generatorischen Betrieb wird eine kinetische Energie eines mit dem elektrischen Motor verbundenen Rades in elektrische Energie gewandelt und diese über den Umrichter in den Energiespeicher gespeist und dort gespeichert. Dieser generatorische Betrieb wird auch Rekuperation genannt und dient gleichzeitig zur Abbremsung des Fahrzeugs mit dem elektrischen Antrieb.

Ein Zugfahrzeug umfasst hier insbesondere ein Nutzfahrzeug, wie insbesondere einen Lastkraftwagen oder eine Zugmaschine. Ein Anhängerfahrzeug, das auch kurz Anhänger genannt wird, umfasst beispielsweise einen Sattelauflieger und einen Deichselanhänger, wie beispielsweise einen Zentralachsanhänger oder einen Gelenkdeichselanhänger.

Gemäß dem Verfahren wird ein aktueller Schlupf mindestens eines angetriebenen Rades des das Anhängerfahrzeug ziehenden Zugfahrzeugs bestimmt. Ein aktueller Schlupf des Zugfahrzeugs umfasst hier vorzugsweise einen Antriebsschlupf und einen Bremsschlupf, die das Verhältnis der Drehzahl eines angetriebenen Rades des Zugfahrzeugs zu einem nichtangetriebenen und daher formschlüssig mitlaufenden Rades des Zugfahrzeugs oder zu einer Referenzgeschwindigkeit des Fahrzeugs beschreiben. Ein Schlupfwert, also ein Wert des Schlupfs, ist demnach, wenn es sich um einen Antriebsschlupf handelt, größer als Null und im Fall, dass es sich um einen Bremsschlupf handelt, kleiner als Null.

Das Verfahren umfasst das Bestimmen des aktuellen Schlupfs, wobei ein Bestimmen des Schlupfs beispielsweise durch Bestimmen vorhandener Zustandswerte des Zugfahrzeugs und durch Ableiten des Schlupfs aus diesen Zustandswerten gewonnen werden kann oder auch ein indirektes oder direktes Messen des Schlupfs möglich ist.

Eine vorteilhafte Ausführungsform umfasst das Bestimmen des Schlupfs, indem Signale von Raddrehzahlsensoren mindestens eines angetriebenen und eines nichtangetriebenen Rades aufgenommen werden, um so durch Vergleich der Raddrehzahlen einen Schlupf zu bestimmen. Gemäß einer weitere Ausführungsform wird die Raddrehzahl nur des angetriebenen Rades mit einer aktuellen Geschwindigkeit des Fahrzeugs, die auch als Referenzgeschwindigkeit bezeichnet werden kann, verglichen. Weiter wird gemäß dem Verfahren ein erwarteter Schlupf für das Rad des Zugfahrzeugs, dessen aktueller Schlupf zuvor bestimmt wurde, bestimmt. Der erwartete Schlupf bezeichnet hier gegenüber dem aktuellen Schlupf insbesondere einen Schlupf des Rades, der üblicherweise beim vorherrschenden Betriebszustand und/oder Fahrzustand des Fahrzeugs am angetriebenen Rad erwartet wird. Ein Wert des erwarteten Schlupfs ist also vorzugsweise kein unmittelbar gemessener, sondern ein aus vorhandenen realen Messwerten berechneter oder geschätzter Wert, wobei so umfasst ist, dass mindestens ein aktueller Messwert oder Wert, der den aktuellen Betriebszustand oder Fahrzustand anzeigt, bei der Bestimmung des erwarteten Schlupfs berücksichtigt wird. Die Messwerte, aus denen der erwartete Schlupf berechnet oder in deren Abhängigkeit der erwartete Schlupf geschätzt wird, umfassen vorzugsweise ermittelte oder geschätzte Reibwerte und/oder Reifenzustandsinformationen, wie Reifendruck und/oder Alter der Reifen und/oder Reifengröße und/oder Beschaffenheit der Reifen. Alternativ oder zusätzlich kann zur Bestimmung des erwarteten Schlupfs auch ein Schlupf eines Antriebsrades im Zugfahrzeug gemessen werden, wenn sich dieses an einer bestimmten Position befindet. Das nachfolgende Anhängerfahrzeug erreicht kurze Zeit später die bestimmte Position, wobei dann davon ausgegangen werden kann, dass ein Antriebsrad des Anhängerfahrzeugs an der bestimmten Position den selben Schlupf aufweist. Gleiches gilt für an der bestimmten Position gemessene Schlupfunterschiede der Antriebsräder des Zugfahrzeugs, die, wenn das Anhängerfahrzeug die bestimmte Position erreicht, ebenso bei den Antriebsrädern des Anhängerfahrzeugs angenommen werden können. Der erwartete Schlupf wird so vorzugsweise aus dem gemessenen Schlupf des Zugfahrzeugs abgeleitet. Vorzugsweise bezieht sich der erwartete Schlupf auf den Schlupf, der bei einem Zugfahrzeug erwartet wird, wenn dieses ohne Anhängerfahrzeug betrieben wird.

Weiter wird eine Beschleunigungsanforderung in Abhängigkeit des aktuellen Schlupfs und des erwarteten Schlupfs bestimmt und daraufhin der elektrische Antrieb des Anhängerfahrzeugs in Abhängigkeit der Beschleunigungsanforderung angesteuert, insbesondere, um ein positives Drehmoment oder ein negatives Drehmoment mit dem elektrischen Antrieb, nämlich insbesondere dem elektrischen Motor der den elektrischen Motoren, zu erzeugen.

Dank der Berücksichtigung einerseits eines aktuellen Schlupfs, also eines tatsächlichen Schlupfs, und zusätzlich eines erwarteten Schlupfs, also eines berechneten theoretischen Schlupfs, eines angetriebenen Rades des Zugfahrzeugs zur Bestimmung eines Beschleunigungswunsches in Form einer Beschleunigungsanforderung durch einen, insbesondere zusätzlichen, Antrieb des Anhängerfahrzeugs, wird der Tatsache Sorge getragen, dass im Falle, dass eine Abweichung zwischen dem aktuellen Schlupf und dem erwarteten Schlupf auftritt, diese Differenz insbesondere auf das Vorhandensein oder Angekuppeltsein eines Anhängerfahrzeugs zurückzuführen ist, das durch seine Masse im Beschleunigungsfall den aktuellen Schlupf gegenüber einem erwarteten Schlupf erhöht und im Verzögerungsfall, also beim Bremsen, den aktuellen Schlupf gegenüber einem erwarteten Schlupf verringert. Diese Aussage ist vor dem Hintergrund getroffen, dass der Bremsschlupf mit einem negativen Wert gegenüber einem Antriebsschlupf mit einem positiven Vorzeichen definiert ist.

Die Differenz zwischen aktuellem Schlupf und erwartetem Schlupf des Zugfahrzeugs führt somit dazu, dass eine Beschleunigungsanforderung für den elektrischen Antrieb des Anhängerfahrzeugs in der Art erzeugt werden kann, dass abhängig von der tatsächlichen Masse des Anhängerfahrzeugs ein zusätzliches Antriebs- oder Bremsmoment mit dem elektrischen Antrieb so erzeugt werden kann, dass die zusätzliche Masse des Anhängerfahrzeugs im Wesentlichen keinen oder nur einen geringen Einfluss auf die Beschleunigungs- oder Bremseigenschaften des Zugfahrzeugs hat. Insbesondere wird also ein Ziehen oder Aufschieben des Anhängerfahrzeugs vermindert oder reduziert ohne dass zusätzliche Sensoren beispielsweise im Bereich der Deichsel oder Kupplung zwischen Zugfahrzeug und Anhängerfahrzeug angeordnet werden müssen, um das Verhalten des Anhängerfahrzeugs zu überwachen. Eine Sensorik zum Bestimmen des aktuellen Schlupfs ist demgegenüber ohnehin in aktuellen Fahrzeugen vorhanden, sodass auf die vorhandene Sensorik zurückgegriffen werden kann und auf eine zusätzliche Sensorik und somit zusätzliche Bauteile verzichtet werden kann. Das Verfahren kann dabei in einer Steuerung des Zugfahrzeugs, insbesondere einem Bremssteuergerät, ausgeführt werden, das in der Regel bereits aktuelle Schlupfwerte verfügbar hat.

Der erwartete Schlupf wird in Abhängigkeit der Masse des Anhängerfahrzeugs bestimmt. Gemäß einer ersten Ausführungsform wird der erwartete Schlupf zusätzlich in Abhängigkeit der Masse des Zugfahrzeugs bestimmt. Vorzugsweise wird hierzu die Masse des Zugfahrzeugs und zusätzlich oder alternativ die Masse des Anhängerfahrzeugs bestimmt. Die Masse des Zugfahrzeugs ist beispielsweise aus einem Druck vorhandener Luftfedern ableitbar, also bestimmbar oder messbar. Die Masse des Anhängerfahrzeugs ist durch einen Druck vorhandener Luftfedern des Anhängerfahrzeugs ableitbar, also bestimmbar oder messbar. Vorzugsweise ist die Masse des Anhängerfahrzeugs beispielsweise im Anhängerfahrzeug für ein Steuergerät, insbesondere ein Anhängerbremssteuergerät, des Anhängerfahrzeugs bekannt und kann so in Form eines Signals oder Datensignals an ein Steuergerät, insbesondere das Bremssteuergerät, des Zugfahrzeugs, das das erfindungsgemäße Verfahren ausführt, übertragen werden.

Da der erwartete Schlupf sich vorzugsweise allein auf die Massen des Zugfahrzeugs bezieht, also als erwarteter Schlupf so definiert ist, dass dieser dem Schlupf entspricht, der dann erwartet wird, wenn das Zugfahrzeug ohne Anhängerfahrzeug betrieben wird, kann dieser noch genauer in Abhängigkeit von der aktuellen Beladungssituation des Zugfahrzeugs und des Anhängerfahrzeugs bestimmt werden. So kann bei entweder bekannter oder gemessener Masse des Zugfahrzeugs zusätzlich oder alternativ auch die Masse des Anhängerfahrzeugs berücksichtigt werden, um den erwarteten Wert zu verbessern. Insbesondere kann so auch direkt aus dem aktuellen Schlupf und der Massenverteilung der Anteil des aktuellen Schlupfs, der auf die Masse des Zugfahrzeugs zurückzuführen ist, als erwarteter Schlupf bestimmt werden. Die Differenz zwischen aktuellem Schlupf und erwartetem Schlupf kann so beispielsweise als Beschleunigungsanforderung verwendet werden.

Weiter ist es auch möglich, die Beschleunigungsanforderung auch unter Berücksichtigung des aktuellen Schlupfs und des auf das Anhängerfahrzeug zurückzuführenden Anteils des aktuellen Schlupfs zur Bestimmung der Beschleunigungsanforderung direkt zu bestimmen. Auch so wird weiterhin indirekt der erwartete Schlupf für das Zugfahrzeug bestimmt, da der Anteil des auf das Anhängerfahrzeug zurückzuführenden Schlupfs der Differenz zwischen aktuellem Schlupf und erwartetem Schlupf entspricht, der erwartete Schlupf also indirekt mitbestimmt wird. Demnach ist die Bestimmung der Beschleunigungsanforderung auch hier abhängig vom aktuellen Schlupf und dem erwarteten Schlupf, auch wenn zur Bestimmung der Beschleunigungsanforderung unmittelbar die Differenz zwischen aktuellem Schlupf und erwartetem Schlupf verwendet wird.

Gemäß einer weiteren Ausführungsform wird der erwartete Schlupf zusätzlich in Abhängigkeit eines Schlupfs mindestens eines angetriebenen Rades des Anhängerfahrzeugs bestimmt. Der Schlupf des Anhängerfahrzeugs bezieht sich demnach vorzugweise auf ein durch den elektrischen Antrieb des Anhängerfahrzeugs angetriebenes Rad des Anhängerfahrzeugs. Der Schlupf ist relativ zu einem nichtangetriebenen Rad des Anhängerfahrzeugs oder des Zugfahrzeugs oder zu einer Referenzgeschwindigkeit definiert.

Durch die Berücksichtigung auch des Schlupfs des Anhängerfahrzeugs, der vorzugsweise von einem Steuergerät, insbesondere einem Anhängerbremssteuergerät, des Anhängerfahrzeugs bestimmt und an das Steuergerät, insbesondere ein Bremssteuergerät, des Zugfahrzeugs übertragen wird, kann der Betrieb auch auf besondere, von normalen Fahrsituationen abweichende, Fahrsituationen übertragen werden, in denen beispielsweise eine glatte Fahrbahn vorliegt und ein Traktionsverlust vorliegt. Demnach würde beispielsweise ohne Berücksichtigung des aktuellen Schlupfs des Anhängerfahrzeugs bei einer glatten Fahrbahn ein sehr hoher aktueller Schlupf gemessen werden, wenn der erwartete Schlupf lediglich auf eine nicht glatte Fahrbahn bezogen ist. Dies würde zu einer sehr hohen Differenz zwischen aktuellem Schlupf des Zugfahrzeugs und erwartetem Schlupf führen und so eine hohe Beschleunigung vom elektrischen Antrieb anfordern. Dadurch, dass jedoch in dem Fall einer glatten Fahrbahn auch ein vergleichsweise hoher aktueller Schlupf des Anhängerfahrzeugs detektiert wird, kann auf einen glatten Untergrund geschlossen werden und somit auch in gleichem Maß der erwartete Schlupf an diese glatte Fahrbahn bezüglich der Erwartung angepasst werden. Die Differenz zwischen aktuellem Schlupf und erwartetem Schlupf kann somit im Wesentlichen konstant zu einer Situation, bei der keine glatte Fahrbahn vorliegt, gehalten werden und ermöglicht somit ein geeignetes Ansteuern des elektrischen Antriebs ohne die Gefahr eines Ziehens oder Schiebens des Anhängerfahrzeugs.

Gemäß einer weiteren Ausführungsform wird der erwartete Schlupf für das Zugfahrzeug in Abhängigkeit eines von einem Antrieb des Zugfahrzeugs erzeugten Antriebsdrehmoments bestimmt. Das Zugfahrzeug weist demnach einen Antrieb, beispielsweise einen Verbrennungsmotor oder ebenfalls einen elektrischen Antrieb auf, der ein aktuelles Antriebsdrehmoment erzeugt, das zur Bestimmung des aktuellen Schlupfs verwendet wird. Demnach ist beispielsweise eine Situation mit einer hohen Beschleunigung durch Änderung eines Antriebsdrehmoments, das beispielsweise zu einem erhöhten Schlupf führen kann, von einer Situation unterscheidbar, in der beispielsweise das Antriebsdrehmoment im Wesentlichen konstant ist und dennoch ein hoher Schlupf auftritt, also der aktuelle Schlupf auf besondere Fahrbahneigenschaften oder eine Bergauffahrt zurückzuführen ist. Der erwartete Schlupf ist somit genauer bestimmbar.

Gemäß einer weiteren Ausführungsform umfasst die Beschleunigungsanforderung einen Maximalwert oder einen Minimalwert für ein mit dem elektrischen Antrieb zu erzeugendes Drehmoment. Demnach wird also vorzugsweise im Falle einer Beschleunigungsanforderung mit einem positiven Wert von einem Maximalwert für ein zu erzeugendes Antriebsdrehmoment des elektrischen Antriebs ausgegangen und, wenn die Beschleunigungsanforderung einen negativen Wert aufweist, von einem negativen Minimalwert für das zu erzeugende Antriebsdrehmoment des elektrischen Antriebs. Das heißt, dass beispielsweise bei der Geschwindigkeitserhöhung oder beim Anfahren des Zugfahrzeugs eine Beschleunigungsanforderung mit einem Maximalwert, also einem positiven Wert, an den elektrischen Antrieb übertragen wird. Dieser Maximalwert ist durch das Bestimmen der Beschleunigungsanforderung in Abhängigkeit des aktuellen Schlupfs sowie des erwarteten Schlupfs so festgelegt, dass, wenn ein Antriebsdrehmoment mit dem elektrischen Antrieb erzeugt wird, das diesem Maximalwert entspricht, das Anhängerfahrzeug das Zugfahrzeug nicht oder gerade noch nicht schiebt. Analog ist im Bremsfall oder Verzögerungsfall die Beschleunigungsanforderung mit einem negativen Minimalwert versehen, der den elektrischen Antrieb veranlasst, ein negatives Antriebsdrehmoment, also ein Bremsmoment, zu erzeugen, das nicht kleiner als der Wert des Beschleunigungsanforderungssignals ist. Demnach wird also ein derartiges Bremsdrehmoment mit dem elektrischen Antrieb erzeugt, das im Wesentlichen verhindert, dass das Anhängerfahrzeug das Zugfahrzeug zieht oder mitbremst. Die Fahrstabilität des Zugfahrzeugs, insbesondere bei Kurvenfahrten, kann somit weiterhin gewährleistet werden.

Gemäß einer weiteren Ausführungsform erzeugt der elektrische Antrieb des Anhängerfahrzeugs ein Antriebsdrehmoment in Abhängigkeit eines Ansteuersignals. Das Ansteuersignal wird weiter in Abhängigkeit der Beschleunigungsanforderung und eines Ladezustands mindestens eines Energiespeichers des elektrischen Antriebs erzeugt.

Hierbei wird berücksichtigt, dass im Falle eines beispielsweise nur noch gering geladenen Energiespeichers und einer Beschleunigungsanforderung mit einem positiven Wert ein vergleichsweise geringeres Antriebsdrehmoment mit dem Ansteuersignal erzeugt wird als bei einem vergleichsweise höher oder vollständig geladenen Energiespeicher. Eine bestimmte Restenergie im Energiespeicher kann somit für Notsituationen, in denen der elektrische Antrieb benötigt wird, zurückgehalten werden. Gleichermaßen wird im Falle, dass die Beschleunigungsanforderung einen negativen Wert umfasst, beispielsweise bei einem vergleichsweise geringen Ladezustand des Energiespeichers, ein hohes negatives Antriebsdrehmoment, also ein Bremsmoment, durch das Ansteuersignal mit dem elektrischen Antrieb eingesteuert bzw. eingeregelt, das zu einem möglichst schnellen bzw. hohen Laden des Energiespeichers beiträgt.

Gemäß einer weiteren Ausführungsform wird das Ansteuersignal in Abhängigkeit mindestens einer aktuellen Drehzahl mindestens eines elektrischen Motors des elektrischen Antriebs erzeugt. Hierbei wird der Wirkungsgrad des Motors, der abhängig von der aktuellen Drehzahl ist, berücksichtigt und beispielsweise nur dann, wenn ein akzeptabler Wirkungsgrad vorliegt, auch der elektrische Antrieb als Antriebsunterstützung für das Zugfahrzeug eingesetzt.

Gemäß einer weiteren Ausführungsform ist im elektrischen Antrieb ein Motordrehzahl-Drehmomentkennfeld festgelegt, das vorzugsweise in Abhängigkeit einer Ladung des Energiespeichers des elektrischen Antriebs verschiebbar ist. Das Ansteuersignal wird weiter derart erzeugt, dass der elektrische Antrieb ein Antriebsdrehmoment mit einem Wert erzeugt, der bei gegebener Drehzahl innerhalb des Kennfelds liegt. Eine Drehzahl wird demnach gemessen oder anhand der aktuellen Betriebsparameter bestimmt und anhand des Kennfeldes ein Drehmoment bestimmt, das im Kennfeld liegt und gleichzeitig vorzugsweise nicht einen durch das Beschleunigungssignal vorgegebenen Maximalwert überschreitet.

Somit kann sichergestellt werden, dass mit dem elektrischen Antrieb immer ein Antriebsdrehmoment erzeugt wird, das bezüglich eines akzeptablen Wirkungsgrads des elektrischen Antriebs erzeugt wird. Entsprechend ist das Motordrehzahl-Drehmomentkennfeld vorzugsweise so festgelegt oder vorbestimmt, dass dieses Antriebsdrehmomente bei Motordrehzahlen umfasst, die oberhalb eines vordefinierten Wirkungsgrads liegen.

Gemäß einer weiteren Ausführungsform sendet der elektrische Antrieb ein Zustandssignal an das Zugfahrzeug, das zumindest umfasst, welches aktuelle Antriebsdrehmoment der elektrische Antrieb aktuell erzeugt. Das Zustandssignal umfasst demnach beispielsweise das oder ein aus dem Ansteuersignal abgeleitetes Signal.

Somit kann der Antrieb des Zugfahrzeugs bei einem Beschleunigungswunsch oder einem Bremswunsch des Fahrers in Abhängigkeit des Anteils des Antriebsdrehmoments, das durch den elektrischen Antrieb aktuell erzeugt wird, ein Antriebsdrehmoment mit dem Zugfahrzeug, das hiervon abhängig ist, erzeugen.

Gemäß einer weiteren Ausführungsform umfasst das Zustandssignal einen Schlupf des Fahrzeuganhängers, nämlich insbesondere eines angetriebenen Rades des Fahrzeuganhängers. Wie bereits oben ausgeführt, dient eine Information über den Schlupf des Fahrzeuganhängers zum Bestimmen des erwarteten Schlupfs des Zugfahrzeugs einerseits, andererseits aber auch, um instabile Fahrzustände des Fahrzeuganhängers zu detektieren und darauf reagieren zu können.

Gemäß einer weiteren Ausführungsform wird das Verfahren mit einem Bremssteuergerät des Zugfahrzeugs und zusätzlich oder alternativ mit einem Bremssteuergerät des Anhängerfahrzeugs, nämlich einem Anhängerbremssteuergerät, ausgeführt. Die Bremssteuergeräte des Zugfahrzeugs und des Anhängerfahrzeugs sind insbesondere bereits nach dem Stand der Technik eingerichtet, den aktuellen Schlupf einzelner Räder zu detektieren und dienen so zur besonders einfachen Umsetzung des Verfahrens. Vorzugsweise sind die Bremssteuergeräte des Zugfahrzeugs und des Anhängerfahrzeugs über einen CAN-BUS 11992-2, der über eine elektrische Leitung realisiert ist, miteinander verbunden. Die Nachricht EBS 11 kann hierbei, da sie bislang standardisiert nicht verwendet wird, zur Kommunikation, insbesondere zur Übertragung der Beschleunigungsanforderung verwendet werden.

Weiter umfasst die Erfindung ein Steuergerät, insbesondere eines Zugfahrzeugs oder eines Anhängerfahrzeugs, zum Ausführen des Verfahrens nach einer der vorgenannten Ausführungsformen. Das Steuergerät ist vorzugsweise ein Bremssteuergerät des Zugfahrzeugs oder ein Bremssteuergerät des Anhängerfahrzeugs, das auch Anhängerbremssteuergerät genannt wird. Das Steuergerät ist hierbei im Falle eines Steuergeräts des Zugfahrzeugs eingerichtet, den aktuellen Schlupf mindestens eines angetriebenen Rades eines das Anhängerfahrzeug ziehenden Zugfahrzeugs sowie eines zu erwarteten Schlupfs für das Rad des Zugfahrzeugs zu bestimmen. Weiter wird mit dem Bremssteuergerät des Zugfahrzeugs in Abhängigkeit des aktuellen Schlupfs und des erwarteten Schlupfs eine Beschleunigungsanforderung erzeugt und die Beschleunigungsanforderung zum Ansteuern des elektrischen Antriebs an ein Anhängerbremssteuergerät ausgesendet. Vorzugsweise ist das Bremssteuergerät des Zugfahrzeugs auch eingerichtet, eine vom Anhängerbremssteuergerät bestimmte Masse des Anhängerfahrzeugs zu bestimmen, um diese bei der Bestimmung des erwarteten Schlupfs zu berücksichtigen. Weiter ist das Bremssteuergerät des Zugfahrzeugs eingerichtet, den aktuellen Schlupf mindestens eines angetriebenen Rades des Anhängerfahrzeugs von einem Anhängerbremssteuergerät zu empfangen, nachdem dieses vom Anhängerbremssteuergerät bestimmt wurde.

Demnach ist das Steuergerät im Falle eines als Anhängerbremssteuergerät ausgebildeten Steuergeräts eingerichtet, eine Beschleunigungsanforderung vom Zugfahrzeug zu empfangen und hierdurch einen elektrischen Antrieb des Anhängerfahrzeugs anzusteuern. Insbesondere weist ein derartiges Anhängerbremssteuergerät einen Speicher für ein Motordrehzahl-Drehmomentkennfeld auf, um ein Ansteuersignal für den elektrischen Antrieb zu erzeugen, der abhängig von der Beschleunigungsanforderung und dem Motordrehzahl-Drehmomentkennfeld ist. Außerdem ist das Anhängerbremssteuergerät vorzugsweise eingerichtet, ein Zustandssignal an ein Bremssteuergerät des Zugfahrzeugs zu senden. Das Zustandssignal umfasst ein aktuelles Drehmoment des elektrischen Antriebs, eine Masse des Anhängerfahrzeugs, mindestens einen Schlupf mindestens eines Rades des Anhängerfahrzeugs und/oder die Masse des Anhängerfahrzeugs.

Außerdem betrifft die Erfindung ein Zugfahrzeug mit einem Bremssteuergerät, insbesondere dem zuvor genannten Steuergerät, zum Ausführen des Verfahrens nach einer der vorgenannten Ausführungsformen. Weiter betrifft die Erfindung ein Anhängerfahrzeug mit einem Anhängerbremssteuergerät, insbesondere mit dem zuvor genannten Anhängerbremssteuergerät, zum Ausführen des Verfahrens nach einer der vorgenannten Ausführungsformen. Zuletzt umfasst die Erfindung ein Gespann aus dem Zugfahrzeug und dem Anhängerfahrzeug.

Weitere Ausführungsformen ergeben sich anhand der in den Figuren näher erläuterten Ausführungsbeispiele. Hierbei zeigen
- Fig. 1: ein Gespann aus einem Zugfahrzeug und einem Anhängerfahrzeug,
- Fig. 2: die Schritte eines Ausführungsbeispiels des Verfahrens,
- Fig. 3: ein Motordrehzahl-Drehmomentkennfeld und
- Fig. 4: eine Abhängigkeit der Kennfeldverschiebung eines Ladezustands eines Energiespeichers.

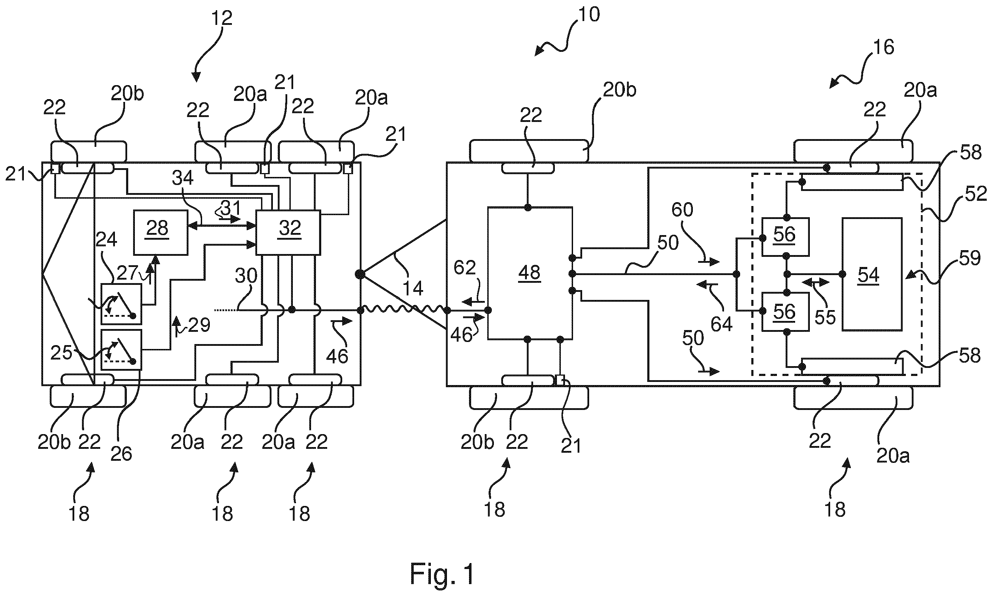

Fig. 1 zeigt ein Gespann 10. Das Gespann 10 umfasst ein Zugfahrzeug 12, das beispielsweise ein Nutzfahrzeug ist. Das Zugfahrzeug 12 ist über eine Deichsel 14 mit einem Anhängerfahrzeug 16 des Gespanns 10 verbunden. Das Anhängerfahrzeug 16 ist somit durch das Zugfahrzeug 12 ziehbar. Das Zugfahrzeug 12 sowie das Anhängerfahrzeug 16 umfassen jeweils mehrere Achsen 18, die jeweils zwei Räder 20a, 20b aufweisen. Die Räder 20a sind angetriebene Räder und gehören so zu einer Antriebsachse 18 und die Räder 20b sind antriebslose Räder und gehören zu einer nichtangetriebenen Achse 18. Antriebslose Räder 20b bezeichnen hier nichtangetriebene Räder. Jedes der Räder 20a, 20b ist mit einer Reibbremse 22 ausgestattet, um im Falle eines Bremswunsches die Räder 20a, 20b zu bremsen. Mindestens eine der Achsen 18 des Zugfahrzeugs 12 ist durch einen Verbrennungsmotor oder einen elektrischen Antrieb angetrieben, wobei ein Verbrennungsmotor oder ein elektrischer Antrieb des Zugfahrzeugs 12 zur besseren Übersicht in Fig. 1 nicht dargestellt ist.

Zum Antreiben des Zugfahrzeugs 12 wird durch Variation einer Gaspedalstellung 23 eines Gaspedals 24 und durch Variation einer Bremspedalstellung 25 eines Bremspedals 26 durch einen Bediener des Zugfahrzeugs 12 ein Wunsch einer Geschwindigkeitserhöhung 27 bzw. ein Bremswunsch 29 signalisiert. Der Wunsch einer Geschwindigkeitserhöhung 27 oder ein Bremswunsch 29 wird gemäß einem hier nicht dargestellten alternativen Ausführungsbeispiel von einer Steuerung erzeugt, die einen autonomen Betrieb oder einen Fahrerassistenzbetrieb steuert.

Im hier dargestellten Ausführungsbeispiel ist zur Signalisierung das Gaspedal 24 mit einem Fahrzeugsteuergerät 28 und das Bremspedal 26 mit einem Bremssteuergerät 32 verbunden. Das Fahrzeugsteuergerät 28 übermittelt Steuersignale zum Ansteuern des nicht dargestellten Antriebs auf einen mit dem Fahrzeugsteuergerät 28 verbundenen, nicht dargestellten Bus. Das Fahrzeugsteuergerät 28 übermittelt aus dem Wunsch einer Geschwindigkeitserhöhung 27 eine angeforderte positive Beschleunigung 31 und übergibt diese über eine Verbindung 34 auch an das Bremssteuergerät 32. Das Bremssteuergerät 32 überwacht einen aktuellen Schlupf mindestens eines angetriebenen Rades 20a. Hierzu sind Raddrehzahlsensoren 21 an den Rädern 20a, 20b vorgesehen. Wird eine Differenzdrehzahl zwischen einem angetriebenen Rad 20a und einem nichtangetriebenen Rad 20b detektiert, so wird der Schlupf im Bremssteuergerät 32 detektiert. Diese Detektion eines Schlupfs wird als Situation des Zugfahrzeugs 12 im Bremssteuergerät 32 gedeutet, in der eine Unterstützung durch einen zusätzlichen elektrischen Antrieb des Anhängerfahrzeugs 16 vorteilhaft wäre. Zur Bestimmung des Maßes einer Unterstützung wird im Bremssteuergerät 32 neben dem aktuellen Schlupf ein erwarteter Schlupf bestimmt, eine Beschleunigungsanforderung 46 in Abhängigkeit des aktuellen Schlupfs und des erwarteten Schlupfs erzeugt und auf einem CAN-ISO 11992-2 Bus 30 ausgesendet. Der Bus 30 ist mit einem Anhängerbremssteuergerät 48 des Anhängerfahrzeugs 16 verbunden, an das die Beschleunigungsanforderung 46 übertragen wird.

Mit dem Anhängerbremssteuergerät 48, das die Beschleunigungsanforderung 46 über den Bus 30 empfängt, ist weiter ein elektrischer Antrieb 52 über einen weiteren Bus 50 verbunden. Der elektrische Antrieb 52 umfasst einen Energiespeicher 54, der wiederaufladbar ist und auch als Akkumulator bezeichnet werden kann. Neben dem Energiespeicher 54 umfasst der elektrische Antrieb 52 zwei Umrichter 56, die mit der Energie des Energiespeichers 54 elektrische Motoren 58 versorgen, um ein positives Drehmoment zu erzeugen. Der Energiespeicher 54, die Umrichter 56 und die elektrischen Motoren 58 entsprechen Komponenten 59 des elektrischen Antriebs 52. Gemäß einem alternativen, hier nicht dargestellten Ausführungsbeispiel ist nur ein elektrischer Motor 58 vorgesehen, der auch nur einen Umrichter 56 aufweist und über ein Differential zwei oder mehrere Räder 20a antreibt.

Die elektrischen Motoren 58 in Fig. 1 können auch im Generatorbetrieb oder generatorisch betrieben werden, sodass elektrische Energie 55 über die Umrichter 56 zurück in den Energiespeicher 54 gespeist wird. Der Umrichter 56 des elektrischen Antriebs 52 ist mit dem Anhängerbremssteuergerät 48 über den weiteren Bus 50 verbunden, um ein Ansteuersignal 60 vom Anhängerbremssteuergerät 48 zu empfangen, das im Anhängerbremssteuergerät 48 in Abhängigkeit der Beschleunigungsanforderung 46 erzeugt wird.

Ein Ansteuern der Umrichter 56, das in Abhängigkeit des Ansteuersignals 60 erfolgt, gibt einerseits vor, ob die elektrischen Motoren 58 im Generatorbetrieb oder Motorbetrieb betrieben werden sollen und welches Drehmoment hierbei aufgewendet werden soll. Im Falle des Betriebs der elektrischen Motoren 58 im motorischen Betrieb oder im Motorbetrieb wird von einem positiven Drehmoment gesprochen, während das Drehmoment, also ein Wert des Drehmoments im generatorischen Betrieb der elektrischen Motoren 58, als negatives Drehmoment bezeichnet wird oder festgelegt ist.

Zum Ansteuern des elektrischen Antriebs 52, nämlich insbesondere der Umrichter 56, wird demnach von dem Anhängerbremssteuergerät 48 über den weiteren Bus 50 das Ansteuersignal 60 an den elektrischen Antrieb 52 gesendet und dem Ansteuersignal 60 im vorliegenden Fall zwei Drehmomentwerte entnommen, mit denen radindividuelle Antriebsdrehmomente erzeugt werden. Vorzugsweise sendet der elektrische Antrieb 52 auch ein Statussignal 64 an das Anhängerbremssteuergerät 48, um dem Anhängerbremssteuergerät 48 beispielsweise oder unter anderem mitteilen zu können, welches aktuell verfügbare positive Drehmoment oder welche aktuell verfügbare positive Drehmomentänderung durch den elektrischen Antrieb 52 zum aktuellen Zeitpunkt bereitgestellt werden kann. Die aktuell verfügbaren Drehmomente oder Drehmomentänderungen sind beispielsweise abhängig vom aktuellen Betriebszustand des elektrischen Antriebs 52. Außerdem oder alternativ umfasst das Statussignal 64 das aktuelle Drehmoment, das von dem oder den elektrischen Motoren 58 zurzeit erzeugt wird.

Das Anhängerbremssteuergerät 48 ist außerdem sowie auch das Bremssteuergerät 32 des Zugfahrzeugs 12 mit Drehzahlsensoren 21 verbunden, um einen Schlupf mindestens eines angetriebenen Rades 20a des Anhängerfahrzeugs 16 zu überwachen oder zu bestimmen. Weiter sendet das Anhängerbremssteuergerät 48 ein Zustandssignal 62 an das Bremssteuergerät 32 des Zugfahrzeugs 12, in dem einerseits das oder zumindest einige der Informationen, die im Statussignal 64 enthalten sind, enthalten ist. Außerdem umfasst das Zustandssignal 62 vorzugsweise auch den Schlupf des mindestens einen angetriebenen Rades 20a des Anhängerfahrzeugs 16. Dies kann ebenfalls im Bremssteuergerät 32 des Zugfahrzeugs 12 zum Erzeugen der Beschleunigungsanforderung 46 berücksichtigt werden. Im Zustandssignal 62 wird außerdem oder alternativ eine im Bremssteuergerät 48 bestimmte Masse des Anhängerfahrzeugs 16 an das Bremssteuergerät 32 des Zugfahrzeugs übertragen.

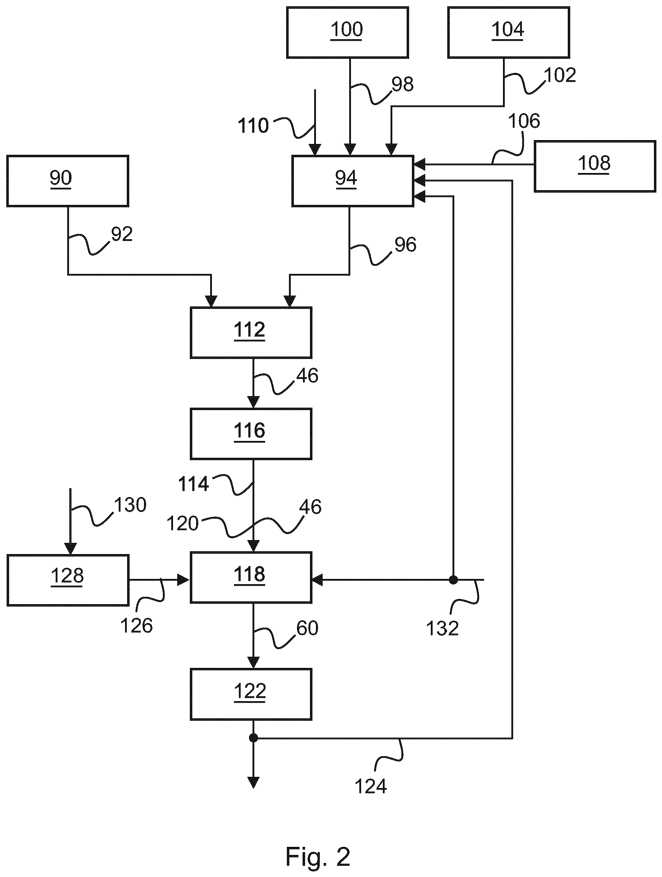

Fig. 2 zeigt die Schritte eines Ausführungsbeispiels des Verfahrens. Zunächst wird in einem Schritt 90 ein aktueller Schlupf 92 mindestens eines angetriebenen Rades 20a eines Anhängerfahrzeugs 16 bestimmt. Vorzugsweise zeitgleich wird in einem Schritt 94 ein erwarteter Schlupf 96 bestimmt. Der erwartete Schlupf 96 im Schritt 94 wird in Abhängigkeit einer dem Schritt 94 zugeführten Masse 98 des Zugfahrzeugs 12, die in einem vorhergehenden Schritt 100 bestimmt oder vordefiniert wurde, sowie in Abhängigkeit einer Masse 102 des Anhängerfahrzeugs 12, die in einem vorhergehenden Schritt 104 bestimmt wurde, bestimmt. Dem Schritt 94 wird neben den Massen 98, 102 ebenfalls zur Bestimmung des erwarteten Schlupfs 96 ein gemessener oder detektierter Schlupf 106 des Anhängerfahrzeugs 16, der in einem Schritt 108 bestimmt wurde, zugeführt. Weiterhin wird bei der Bestimmung des erwarteten Schlupfs 96 im Schritt 94 auch ein aktuelles Antriebsdrehmoment 110 des Antriebs 52 des Zugfahrzeugs 12 mitberücksichtigt. Alternativ oder zusätzlich ist gemäß diesem oder einem weiteren Ausführungsbeispiel der erwartete Schlupf 96 abhängig von einem tatsächlich ermittelten und/oder einem geschätzten und/oder einem angenommenen Reibwert und/oder Reifeninformationen und/oder Reifenzustandsinformationen.

Der aktuelle Schlupf 92 sowie der erwartete Schlupf 96 werden nach der Bestimmung einem Schritt 112 zugeführt, in dem eine Beschleunigungsanforderung 46 erzeugt und als Signal ausgegeben wird. Diese Beschleunigungsanforderung 46 wird dann in einem Schritt 116 an ein Anhängerbremssteuergerät 48 übertragen und mit dem Anhängerbremssteuergerät 48 im Schritt 118 ein Ansteuersignal 60 zum Ansteuern eines elektrischen Antriebs 52 in Abhängigkeit der Beschleunigungsanforderung 46 erzeugt. Hierbei wird das Beschleunigungssignal, wenn es einen positiven Wert aufweist, als Maximalwert 114 oder, wenn es einen negativen Wert aufweist, als Minimalwert 120 interpretiert. In Abhängigkeit des Ansteuersignals 60 wird dann in einem Schritt 122 ein Antriebsdrehmoment 124 mit einem elektrischen Antrieb 52 erzeugt. Zum Bestimmen des Ansteuersignals 60 im Schritt 118 wird dem Schritt 118 ein Motordrehzahl-Drehmomentkennfeld 126 zugeführt, das für den elektrischen Antrieb 52 vordefiniert und in dem Anhängerbremssteuergerät 48 hinterlegt ist. Das Motordrehzahl-Drehmomentkennfeld 126 wird in einem Schritt 128 in Abhängigkeit eines Ladezustands 130 eines Energiespeichers 54 des elektrischen Antriebs 52 an den Ladezustand 130 angepasst.

Weiterhin wird das Ansteuersignal 60 im Schritt 118 in Abhängigkeit einer Drehzahl 132 mindestens eines Motors 58 des elektrischen Antriebs 52 bestimmt. Diese Drehzahl 132 sowie auch das aktuell erzeugte Antriebsdrehmoment 124 werden gemäß diesem Ausführungsbeispiel bei der Erzeugung des erwarteten Schlupfs 96 des Zugfahrzeugs 12 berücksichtigt. Beispielsweise werden das aktuell erzeugte Antriebsdrehmoment 124 und die Drehzahl 132 in einem Statussignal 64 hierzu vom Anhängerbremssteuergerät 48 zum Bremssteuergerät 32 des Zugfahrzeugs 12 übertragen.

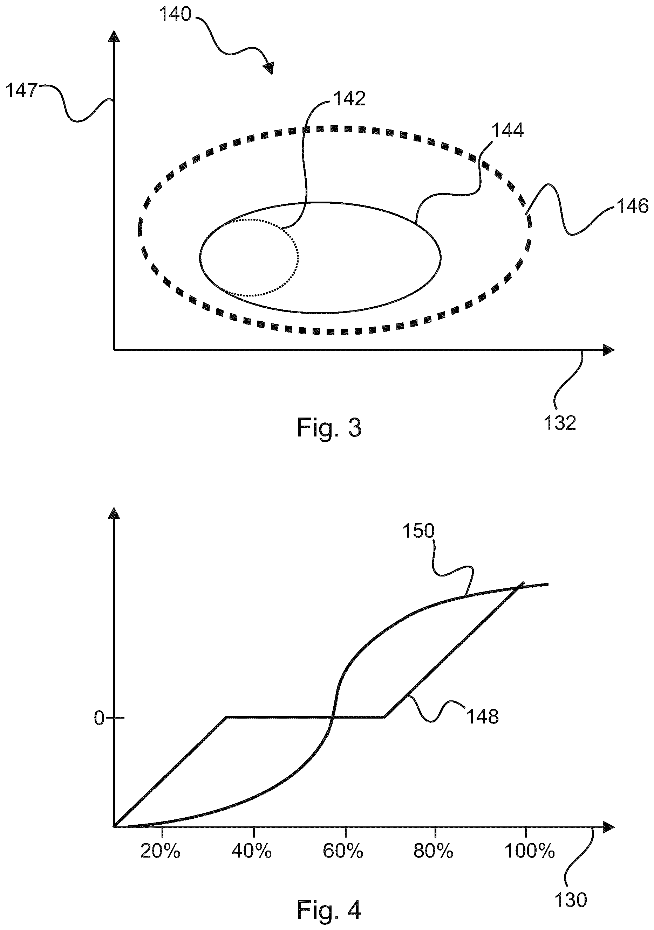

Fig. 3 zeigt ein Beispiel für ein Motordrehzahl-Drehmomentkennfeld 140, das vorzugsweise mehrere Betriebsbereiche 142 bis 146 aufweist. Die Felder umfassen jeweils einen Wertebereich von Kombinationen aus Drehzahl 132 des elektrischen Antriebs 52, die auf der waagerechten Achse aufgetragen ist, und Drehmomenten 124, die auf der senkrechten Achse angegeben sind.

Ein aktueller Betriebsbereich 142 entspricht dem Bereich, in dem der elektrische Antrieb 52 durch das Ansteuersignal 60 vorzugsweise zurzeit betrieben wird, während dieser aktuelle Betriebsbereich 142 innerhalb eines optimalen Betriebsbereichs 144 in Abhängigkeit der aktuellen Drehzahl 132 verschoben werden kann. Der optimale Betriebsbereich 144 kann wiederum in Abhängigkeit des Ladezustands 130 in einem zulässigen Betriebsbereich 146 variieren. Das Kennfeld 140 beschreibt somit Wertebereiche, in denen Kombinationen von Motordrehzahl 132 und Motordrehmoment 124 des elektrischen Motors 58 einstellbar sind und sich gegenüber dem übrigen Bereich abgrenzen, in dem der elektrische Motor 58 nicht betrieben werden soll oder darf.

Fig. 4 zeigt eine Abhängigkeit des Kennfelds 140 vom Ladezustand 130 des Energiespeichers 54, wobei auf der waagerechten Achse der Ladezustand 130 zwischen 0 und 100 % aufgetragen ist und auf der senkrechten Achse eine Anhebung oder Absenkung des optimalen Betriebsbereichs 144 gegenüber einem Nullwert des optimalen Betriebsbereichs 144 angezeigt ist. Eine Anhebung oder Absenkung des optimalen Betriebsbereichs kann entweder intervallweise, was mit der Kurve 148 dargestellt ist, oder dynamisch, was mit der Kurve 150 dargestellt ist, erfolgen.

Im vorliegenden Beispiel befindet sich demnach zwischen etwa 30 und 80 % des Ladezustands 130 der optimale Betriebsbereich 144 im Wesentlichen zentral im zulässigen Betriebsbereich 146, wenn von einer intervallweisen Anpassung ausgegangen wird. Außerhalb dieser Grenzen verschiebt sich der optimale Betriebsbereich 144 entweder nach oben oder nach unten. Ein Betreiben des elektrischen Antriebs 52 mit einem geeigneten Wirkungsgrad ist so möglich.

### Bezugszeichenliste als Teil der Beschreibung

- 10: Gespann
- 12: Zugfahrzeug
- 14: Deichsel
- 16: Anhängerfahrzeug
- 18: Achsen
- 20a: angetriebene Räder
- 20b: nichtangetriebene Räder
- 21: Raddrehzahlsensoren
- 22: Reibbremse
- 23: Gaspedalstellung
- 24: Gaspedal
- 25: Bremspedalstellung
- 26: Bremspedal
- 27: Wunsch einer Geschwindigkeitserhöhung
- 28: Fahrzeugsteuergerät
- 29: Bremswunsch
- 30: CAN-Bus
- 31: angeforderte positive Beschleunigung
- 32: Bremssteuergerät
- 34: Verbindung
- 46: Beschleunigungsanforderung
- 48: Anhängerbremssteuergerät
- 50: weitere Bus
- 52: elektrischer Antrieb
- 54: Energiespeicher
- 55: Energie
- 56: Umrichter
- 58: elektrische Motoren
- 59: Komponenten des elektrischen Antriebs
- 60: Ansteuersignal
- 62: Zustandssignal
- 64: Statussignal
- 90: Schritt des Verfahrens
- 92: aktueller Schlupf
- 94: Schritt des Verfahrens
- 96: erwarteter Schlupf
- 98: zugeführte Masse des Zugfahrzeugs
- 100: Schritt des Verfahrens
- 102: Masse des Anhängerfahrzeugs
- 104: Schritt des Verfahrens
- 106: gemessener Schlupf
- 108: Schritt des Verfahrens
- 110: Antriebsdrehmoment
- 112: Schritt des Verfahrens
- 114: Maximalwer
- 116-118: Schritte des Verfahrens
- 120: Minimalwert
- 122: Schritt des Verfahrens
- 124: Antriebsdrehmoment
- 126: Motordrehzahl-Drehmomentkennfeld
- 128: Schritt des Verfahrens
- 130: Ladezustand
- 132: Drehzahl
- 140: Motordrehzahl-Drehmomentkennfeld
- 142: aktueller Betriebsbereich
- 144: optimaler Betriebsbereich
- 146: zulässiger Betriebsbereich
- 148: Kurve
- 150: Kurve

## Patentansprüche

1. Verfahren zum Ansteuern eines elektrischen Antriebs (52) eines Anhängerfahrzeugs (16) mit einem Zugfahrzeug (12), umfassend ein Bestimmen (112) einer Beschleunigungsanforderung (46) für den elektrischen Antrieb (52),
mit den Schritten:
- Bestimmen (90) eines aktuellen Schlupfs (92) mindestens eines angetriebenen Rades (20a) eines das Anhängerfahrzeug (16) ziehenden Zugfahrzeugs (12),
- Bestimmen (94) eines erwarteten Schlupfs (96) für das angetriebene Rad (20a) des Zugfahrzeugs (12),
- Bestimmen (112) der Beschleunigungsanforderung (46) in Abhängigkeit des bestimmten aktuellen Schlupfs (92) und des bestimmten erwarteten Schlupfs (96),
- Ansteuern (118) des elektrischen Antriebs (52) mit einem Ansteuersignal (60) in Abhängigkeit der Beschleunigungsanforderung (46),
wobei der erwartete Schlupf (96) zusätzlich in Abhängigkeit einer Masse (102) des Anhängerfahrzeugs (16) bestimmt wird.

2. Verfahren nach Anspruch 1, wobei der erwartete Schlupf (96) zusätzlich in Abhängigkeit einer Masse (98) des Zugfahrzeugs (12) bestimmt wird, wobei hierzu vorzugsweise die aktuelle Masse (98) des Zugfahrzeugs (12) bestimmt wird.

3. Verfahren nach Anspruch 1 oder 2, wobei der erwartete Schlupf (96) zusätzlich in Abhängigkeit eines vom Anhängerfahrzeug (16) empfangenen aktuellen Schlupfs (106) mindestens eines angetriebenen Rades (20a) des Anhängerfahrzeugs (16) bestimmt wird.

4. Verfahren nach einem der vorhergehenden Ansprüche, wobei der erwartete Schlupf (96) zusätzlich in Abhängigkeit eines von einem Zugfahrzeug (12) erzeugten Antriebsdrehmoments (110) bestimmt wird.

5. Verfahren nach einem der vorhergehenden Ansprüche, wobei die Beschleunigungsanforderung (46) einen Maximalwert (114) oder einen Minimalwert (120), für ein mit dem elektrischen Antrieb (52) zu erzeugendes Antriebsdrehmoment (124) entspricht oder umfasst.

6. Verfahren nach einem der vorhergehenden Ansprüche, wobei der elektrische Antrieb (52) ein Antriebsdrehmoment (124) in Abhängigkeit eines Ansteuersignals (60) erzeugt, und das Ansteuersignal (60) in Abhängigkeit der Beschleunigungsanforderung (46) sowie eines Ladezustands (130) eines Energiespeichers (54) des elektrischen Antriebs (52) erzeugt wird.

7. Verfahren nach einem der vorhergehenden Ansprüche, wobei das Ansteuersignal (60) in Abhängigkeit mindestens einer aktuellen Drehzahl (132) mindestens eines elektrischen Motors (58) des elektrischen Antriebs (52) erzeugt wird.

8. Verfahren nach einem der vorhergehenden Ansprüche, wobei ein Motordrehzahl-Drehmomentkennfeld (140) festgelegt wird, das vorzugsweise in Abhängigkeit eines Ladezustands (130) eines Energiespeichers (54) des elektrischen Antriebs (52) verschiebbar ist, wobei das Ansteuersignal (60) derart erzeugt wird, dass der elektrische Antrieb (52) ein Antriebsdrehmoment (124) erzeugt, das bei aktueller Drehzahl (132) des elektrischen Motors (58) innerhalb des Motordrehzahl-Drehmomentkennfelds (140), insbesondere eines optimalen Bereichs (144) des Motordrehzahl-Drehmomentkennfelds (140), liegt.

9. Verfahren nach einem der vorhergehenden Ansprüche, wobei der elektrische Antrieb (52) ein Zustandssignal (62) an das Zugfahrzeug (12) sendet, das umfasst, welches Antriebsdrehmoment (124) der elektrische Antrieb (52) aktuell erzeugt.

10. Verfahren nach Anspruch 9, wobei das Zustandssignal (62) den aktuellen Schlupf (106) mindestens eines angetriebenen Rades (20a) des Anhängerfahrzeugs (16) umfasst.

11. Verfahren nach einem der vorhergehenden Ansprüche, wobei das Verfahren mit mindestens einem Bremssteuergerät (32, 48) des Zugfahrzeugs (12) und/oder des Anhängerfahrzeugs (16) ausgeführt wird.

12. Steuergerät (32, 48) eines Zugfahrzeugs (12) oder eines Anhängerfahrzeugs (16), zum Ausführen des Verfahrens nach einem der Ansprüche 1 bis 11, wobei das Steuergerät (32, 48) vorzugsweise ein Bremssteuergerät (32) oder ein Anhängerbremssteuergerät (48) ist.

13. Zugfahrzeug (12) mit einem Steuergerät (32, 48) nach Anspruch 12, das ein Bremssteuergerät ist (32).

14. Anhängerfahrzeug (16) mit einem Steuergerät (32, 48) nach Anspruch 12, das ein Anhängerbremssteuergerät (48) ist.

15. Gespann (10), umfassend ein Zugfahrzeug (12) nach Anspruch 13 und ein Anhängerfahrzeug (16) nach Anspruch 14.

## Claims

1. Method for actuating an electric drive (52) of a trailer vehicle (16) with a towing vehicle (12), which comprises determining (112) an acceleration requirement (46) for the electric drive (52),
comprising the following steps:
- determining (90) a current slip (92) of at least one driven wheel (20a) of a towing vehicle (12) pulling the trailer vehicle (16),
- determining (94) an expected slip (96) for the driven wheel (20a) of the towing vehicle (12),
- determining (112) the acceleration requirement (46) on the basis of the determined current slip (92) and the determined expected slip (96),
- actuating (118) the electric drive (52) by means of an actuation signal (60) on the basis of the acceleration requirement (46),
wherein the expected slip (96) is additionally determined on the basis of a mass (102) of the trailer vehicle (16).

2. Method according to claim 1, wherein the expected slip (96) is additionally determined on the basis of a mass (98) of the towing vehicle (12), wherein the current mass (98) of the towing vehicle (12) is preferably determined for this purpose.

3. Method according to claim 1 or claim 2, wherein the expected slip (96) is additionally determined on the basis of a current slip (106), which is received from the trailer vehicle (16), of at least one driven wheel (20a) of the trailer vehicle (16).

4. Method according to any of the preceding claims, wherein the expected slip (96) is additionally determined on the basis of a drive torque (110) generated by a towing vehicle (12).

5. Method according to any of the preceding claims, wherein the acceleration requirement (46) corresponds to or comprises a maximum value (114) or a minimum value (120) for a drive torque (124) to be generated by the electric drive (52).

6. Method according to any of the preceding claims, wherein the electric drive (52) generates a drive torque (124) on the basis of an actuation signal (60), and the actuation signal (60) is generated on the basis of the acceleration requirement (46) and a charge state (130) of an energy store (54) of the electric drive (52).

7. Method according to any of the preceding claims, wherein the actuation signal (60) is generated on the basis of at least one current speed (132) of at least one electric motor (58) of the electric drive (52).

8. Method according to any of the preceding claims, wherein a motor speed torque map (140) is established, which is preferably movable on the basis of a charge state (130) of an energy store (54) of the electric drive (52), wherein the actuation signal (60) is generated such that the electric drive (52) generates a drive torque (124) which is within the motor speed torque map (140), in particular within an optimal range (144) of the motor speed torque map (140), at the current speed (132) of the electric motor (58).

9. Method according to any of the preceding claims, wherein the electric drive (52) sends a state signal (62) to the towing vehicle (12), which signal comprises which drive torque (124) the electric drive (52) is currently generating.

10. Method according to claim 9, wherein the state signal (62) comprises the current slip (106) of at least one driven wheel (20a) of the trailer vehicle (16).

11. Method according to any of the preceding claims, wherein the method is carried out by at least one brake control unit (32, 48) of the towing vehicle (12) and/or of the trailer vehicle (16).

12. Control unit (32, 48) of a towing vehicle (12) or a trailer vehicle (16), for carrying out the method according to any of claims 1 to 11, wherein the control unit (32, 48) is preferably a brake control unit (32) or a trailer brake control unit (48).

13. Towing vehicle (12) comprising a control unit (32, 48) according to claim 12, which is a brake control unit (32).

14. Trailer vehicle (16) comprising a control unit (32, 48) according to claim 12, which is a trailer brake control unit (48).

15. Combination (10) comprising a towing vehicle (12) according to claim 13 and a trailer vehicle (16) according to claim 14.

## Revendications

1. Procédé pour la commande d'un entraînement électrique (52) d'une remorque (16) avec un véhicule tracteur (12), comprenant une détermination (112) d'une demande d'accélération (46) pour l'entraînement électrique (52),
comportant les étapes consistant à :
- déterminer (90) un patinage actuel (92) d'au moins une roue entraînée (20a) d'un véhicule tracteur (12) tirant la remorque (16),
- déterminer (94) un patinage attendu (96) pour la roue entraînée (20a) du véhicule tracteur (12),
- déterminer (112) la demande d'accélération (46) en fonction du patinage actuel (92) déterminé et du patinage attendu (96) déterminé,
- commander (118) l'entraînement électrique (52) au moyen d'un signal de commande (60) en fonction de la demande d'accélération (46),
dans lequel le patinage attendu (96) est en outre déterminé en fonction d'une masse (102) de la remorque (16).

2. Procédé selon la revendication 1, dans lequel le patinage attendu (96) est en outre déterminé en fonction d'une masse (98) du véhicule tracteur (12), dans lequel la masse (98) actuelle du véhicule tracteur (12) est de préférence déterminée à cette fin.

3. Procédé selon la revendication 1 ou 2, dans lequel le patinage attendu (96) est en outre déterminé en fonction d'un patinage actuel (106), reçu en provenance de la remorque (16), d'au moins une roue entraînée (20a) de la remorque (16).

4. Procédé selon l'une des revendications précédentes, dans lequel le patinage attendu (96) est en outre déterminé en fonction d'un couple d'entraînement (110) généré par un véhicule tracteur (12).

5. Procédé selon l'une des revendications précédentes, dans lequel la demande d'accélération (46) comprend une valeur maximale (114) ou une valeur minimale (120) pour un couple d'entraînement (124) à générer avec l'entraînement électrique (52), ou correspond à celle-ci.

6. Procédé selon l'une des revendications précédentes, dans lequel l'entraînement électrique (52) génère un couple d'entraînement (124) en fonction d'un signal de commande (60), et le signal de commande (60) est généré en fonction de la demande d'accélération (46) ainsi que d'un état de charge (130) d'un accumulateur d'énergie (54) de l'entraînement électrique (52).

7. Procédé selon l'une des revendications précédentes, dans lequel le signal de commande (60) est généré en fonction d'au moins une vitesse de rotation actuelle (132) d'au moins un moteur électrique (58) de l'entraînement électrique (52).

8. Procédé selon l'une des revendications précédentes, dans lequel un champ caractéristique de couple de vitesse de rotation de moteur (140) est fixé, lequel peut être de préférence décalé en fonction d'un état de charge (130) d'un accumulateur d'énergie (54) de l'entraînement électrique (52), dans lequel le signal de commande (60) est généré de telle sorte que l'entraînement électrique (52) génère un couple d'entraînement (124) qui se situe, pour la vitesse de rotation actuelle (132) du moteur électrique (58), dans le champ caractéristique de couple de vitesse de rotation de moteur (140), en particulier dans une zone optimale (144) du champ caractéristique de couple de vitesse de rotation de moteur (140).

9. Procédé selon l'une des revendications précédentes, dans lequel l'entraînement électrique (52) envoie au véhicule tracteur (12) un signal d'état (62) qui comprend le couple d'entraînement (124) que l'entraînement électrique (52) génère actuellement.

10. Procédé selon la revendication 9, dans lequel le signal d'état (62) comprend le patinage actuel (106) d'au moins une roue entraînée (20a) de la remorque (16).

11. Procédé selon l'une des revendications précédentes, dans lequel le procédé est exécuté au moyen d'au moins un appareil de commande de frein (32, 48) du véhicule tracteur (12) et/ou de la remorque (16).

12. Appareil de commande (32, 48) d'un véhicule tracteur (12) ou d'une remorque (16), pour l'exécution du procédé selon l'une des revendications 1 à 11, dans lequel l'appareil de commande (32, 48) est de préférence un appareil de commande de frein (32) ou un appareil de commande de frein de remorque (48).

13. Véhicule tracteur (12) comportant un appareil de commande (32, 48) selon la revendication 12, lequel est un appareil de commande de frein (32).

14. Remorque (16) comportant un appareil de commande (32, 48) selon la revendication 12, lequel est un appareil de commande de frein de remorque (48).

15. Attelage (10), comportant un véhicule tracteur (12) selon la revendication 13 et une remorque (16) selon la revendication 14.
